(19) **Europäisches Patentamt / European Patent Office / Office européen des brevets**

(11) **EP 2 680 353 B1**

(12) **FASCICULE DE BREVET EUROPEEN**

(45) Date de publication et mention
de la délivrance du brevet:
**25.10.2017 Bulletin 2017/43**

(21) Numéro de dépôt: **13173486.5**

(22) Date de dépôt: **25.06.2013**

(51) Int Cl.:
*H01M 4/92* (2006.01)   *B01J 23/42* (2006.01)
*B01J 35/00* (2006.01)   *B01J 35/08* (2006.01)
*B01J 37/12* (2006.01)   *B01J 37/16* (2006.01)
*B01J 37/34* (2006.01)   *B01J 38/00* (2006.01)
*B01J 21/18* (2006.01)

(54) **Nanoparticules creuses de platine pour piles à combustible**

Hohle Platin-Nanopartikel für Brennstoffzellen

Hollow platinum nanoparticles for fuel cells

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2012 FR 1255986**

(43) Date de publication de la demande:
**01.01.2014 Bulletin 2014/01**

(73) Titulaires:
• **L'AIR LIQUIDE, SOCIETE ANONYME POUR L'ETUDE ET L'EXPLOITATION DES PROCEDES GEORGES CLAUDE
75007 Paris (FR)**
• **Institut Polytechnique de Grenoble
38000 Grenoble (FR)**
• **Centre National de la Recherche Scientifique
75016 Paris (FR)**

(72) Inventeurs:
• **Montaut, Audrey
38100 GRENOBLE (FR)**
• **Moutin, Sandrine
38100 GRENOBLE (FR)**
• **Chatenet, Marian, Julien
38240 MEYLAN (FR)**
• **Durst, Julien, Frédéric, Christophe
38000 GRENOBLE (FR)**
• **Maillard, Frédéric, Thibaut
38000 GRENOBLE (FR)**
• **Dubau, Laetitia
38000 Grenoble (FR)**

(74) Mandataire: **Chevalier, Renaud Philippe et al
Cabinet Germain & Maureau
BP 6153
69466 Lyon Cedex 06 (FR)**

(56) Documents cités:
WO-A1-2011/099957   WO-A1-2012/009467
JP-A- 2007 207 679   KR-B1- 100 728 199

• DUBAU L ET AL: "Further insights into the durability of PtCo/C electrocatalysts: Formation of hollow Pt nanoparticles induced by the Kirkendall effect", ELECTROCHIMICA ACTA, ELSEVIER SCIENCE PUBLISHERS, BARKING, GB, vol. 56, no. 28, 15 mars 2011 (2011-03-15) , pages 10658-10667, XP028113398, ISSN: 0013-4686, DOI: 10.1016/J.ELECTACTA.2011.03.073 [extrait le 2011-03-24]

**Description**

La présente invention a trait à des nanoparticules de platine stabilisées qui sont utilisées comme électrocatalyseur dans des piles à combustible.

Les piles à combustible, telles que les piles à combustible à membrane échangeuse de protons (ci-après abrégée « PEMFC ») sont une alternative prometteuse pour alimenter en énergie électrique « propre » des applications stationnaires ou mobiles. Toutefois, malgré leurs excellentes performances, leur développement économique est entravé par le coût élevé de leurs matériaux constitutifs et la durabilité insuffisante des matériaux constituant l'assemblage membrane-électrodes en fonctionnement réel.

Dans le cadre de la présente invention, on entend par fonctionnement réel d'une pile à combustible, des variations de potentiel provoquées par les changements de puissance débitée par la pile. A « pleine puissance », le potentiel de la cathode peut descendre vers 0,5 V par rapport à l'électrode réversible à hydrogène (RHE), voire vers 0 V/RHE en cas de noyage / consommation totale de l'oxygène, tandis qu'il peut monter à 1 V/RHE en circuit ouvert (courant nul) ou plus (jusqu'à 1,5 V/RHE) dans des phases transitoires de démarrage / arrêt et appauvrissement local en combustible à l'anode.

La performance de la couche catalytique d'une PEMFC est régie par plusieurs processus qui doivent être optimisés de façon simultanée :

- la conduction ionique assurée par l'ionomère,
- la conduction électronique assurée par le support carboné, et
- la diffusion du réactant et des produits de réaction dans sa porosité.

Afin d'augmenter le facteur d'utilisation $u_{catalyseur}$ (la fraction de catalyseur qui est à la fois en percolation ionique avec la membrane (via l'ionomère des couches catalytiques) et en percolation électronique (via le support carboné)), les techniques de dépôt métallique sous vide (sputtering, plasma vapor deposition, chemical vapor déposition) permettant de déposer des quantités contrôlées de catalyseur (de préférence du platine) à la surface d'une électrode à diffusion de gaz ont démontré un potentiel intéressant.

Les électrocatalyseurs utilisés dans les couches catalytiques de PEMFC peuvent être :

- des nanoparticules « pleines » de platine qui sont supportées sur un carbone de surface spécifique élevée. Ce type d'électrocatalyseur est ci-après abrégé : « Pt/C » ;
- des nanoparticules « pleines » multi-métalliques, à savoir qu'outre le platine, elles contiennent d'autres éléments métalliques (en général des métaux de transition), et sont supportées sur un carbone de surface spécifique élevée. Ce type d'électrocatalyseur est ci-après abrégé : « $Pt_xM/C$».

Dans le cadre de la présente invention, les « nanoparticules sont supportées sur un carbone », ce qui signifie que les nanoparticules sont, généralement du fait de phénomènes de physisorption, « posées » sur le carbone et interagissent avec le support de carbone par des liaisons dipolaires ou faibles.

Le support de carbone a pour fonction de stabiliser les nanoparticules qui, en son absence, s'aggloméreraient entre elles. Cela conduirait à :

- une perte de dispersion (le rapport entre le nombre $N_{surface}$ d'atomes de platine présents à la surface et le nombre $N_{total}$ total d'atomes contenus dans une nanoparticule qui se traduit pratiquement comme le rapport surface active électrochimiquement / masse de platine utilisé),
- de faibles aires actives faibles électrochimiquement, et
- une mauvaise distribution des nanoparticules dans le volume de l'électrode.

Ces conséquences ne seraient pas compatibles avec de bonnes performances électriques.

La taille des nanoparticules d'électrocatalyseur « pleines » est généralement comprise entre 1 et 5 nm.

A l'anode de la PEMFC, l'électrocatalyseur de platine sur support de carbone (Pt/C) est utilisé pour oxyder le dihydrogène en protons et en électrons.

A la cathode de la PEMFC, l'électrocatalyseur de platine sur support de carbone (Pt/C) catalyse la réaction de réduction de l'oxygène conduisant à la formation d'eau. Cette réaction se produit à haut potentiel, de l'ordre de 0,6 à 1 V/RHE. Il en résulte une instabilité des nanoparticules de platine, et donc une perte de surface active électrochimiquement des nanoparticules, du fait du vieillissement de type maturation d'Ostwald.

En effet, les nanoparticules de platine peuvent être corrodées en ions $Pt^{z+}$ (avec z=2,4). Cette corrosion a lieu de façon préférentielle sur les plus petites nanoparticules de platine, comme le montre l'équation de Gibbs-Thompson (Equation 1) ci-dessous, où $\mu_i$ est un potentiel chimique, $\nu_m$ est le volume d'un atome et y la tension superficielle:

$$\mu_{i,(d)} = \mu_{i,(d=\infty)} + \frac{4\upsilon_m\gamma}{d}$$

Equation 1

Cette équation montre qu'en raison de l'excès d'énergie de surface, le potentiel chimique de nanoparticules de faible taille est plus élevé que celui d'un matériau massif $\mu_i,(d=\infty)$.

Les ions $Pt^{z+}$ (z=2,4) produits peuvent se redéposer électrochimiquement (réduction par le potentiel électrochimique) ou chimiquement (réduction par le dihydrogène provenant de l'anode) sur les nanoparticules de taille supérieure (dont le potentiel standard est plus élevé), résultant *in fine* en un accroissement de la taille moyenne des nanoparticules d'électrocatalyseur. L'équation 1 précitée montre que ces dernières seront alors plus stables vis-à-vis de ce phénomène, puisque plus les nanoparticules d'électrocatalyseur sont de taille importante, plus elles sont stables.

La décroissance de la taille des nanoparticules de platine pour leur utilisation comme électrocatalyseur dans des PEMFC permet d'augmenter la dispersion du platine. En termes d'activité massique de l'électrocatalyseur, l'optimum est néanmoins obtenu avec des diamètres de l'ordre de 3 à 4 nm, taille qu'il est difficile de contrôler pour des électrocatalyseurs dont le pourcentage massique de platine rapporté à la masse de substrat de carbone (soit $m_{pt}/(m_{pt}+m_c)$) est supérieur à 30%, du fait de la tendance prononcée à l'agglomération des nanoparticules de platine. Ce qui réduit d'autant leur dispersion.

Cependant, la décroissance de la taille des nanoparticules de platine n'est pas pleinement satisfaisante, du fait que les cinétiques de la réaction de réduction de l'oxygène décroissent de façon conséquente, lorsque la taille des nanoparticules est inférieure à une taille de l'ordre de 3 à 4 nm.

C'est pourquoi, comme évoqué ci-dessus, on utilise dans le domaine technique des électrolyseurs de PEMFC du platine allié à un second élément moins noble tel qu'un métal de transition (Pt$_x$M/C avec M = Co, Ni, Cu, Cr par exemples et x compris entre 0,2 et 10, de préférence entre 0,5 et 3).

Cela présente les deux avantages suivants :

(i) une décroissance de la masse de métal précieux (à savoir le platine) utilisée dans la couche catalytique et donc de son coût,

(ii) une multiplication de l'activité spécifique pour la réaction réduction de l'oxygène (le rapport de l'activité catalytique à l'aire du catalyseur) par un facteur deux à quatre par rapport à un électrocatalyseur de type Pt/C tel que détaillé ci-dessus.

Les mécanismes de vieillissement étant similaires d'un point de vue morphologique sur des électrocatalyseurs de type Pt/C ou de type Pt$_x$M/C, la maturation d'Ostwald demeure également un problème en cours de fonctionnement d'une cathode de PEMFC. Le vieillissement est même aggravé par la présence d'un métal M moins noble (et donc plus corrodable) que le platine. Les métaux M alliés au platine sont en effet instables du point de vue de la thermodynamique. On constate une sévère déplétion du métal le moins noble, non seulement à la surface mais aussi dans le coeur du matériau de l'électrocatalyseur au cours du fonctionnement de la PEMFC. Cela cause une décroissance marquée de l'activité spécifique (jusqu'à des valeurs parfois inférieures à celle du platine) et un empoisonnement sévère de l'ionomère et de la membrane échangeuse de protons par les ions $M^{y+}$ ainsi produits. Certes, la taille plus élevée des cristallites bimétalliques permet d'atténuer l'importance de ce phénomène.

Les ions $Pt^{z+}$ (z = 2, 4) et $M^{y+}$ (dans le cas d'alliages multi-éléments pour un électrocatalyseur de type Pt$_x$M/C) produits par la corrosion des nanoparticules sont redistribués dans l'assemblage membrane-électrodes par les deux phénomènes suivants :

- la migration (gradient de potentiel électrique), et
- la diffusion (gradient de potentiel chimique).

Lorsque la PEFMC fonctionne, la migration maintient théoriquement ces ions dans la couche catalytique cathodique, ce qui entraîne un empoisonnement des terminaisons sulfonées de l'ionomère (conducteur ionique) et une forte décroissance de l'activité électrocatalytique pour la réaction de réduction de l'oxygène de l'électrocatalyseur de type Pt$_x$M/C en contact avec cet ionomère. Ces ions peuvent diffuser dans la membrane échangeuse de protons et dans la couche de diffusion gazeuse lors d'une interruption du fonctionnement de la PEMFC (par exemple au cours d'une opération de maintenance).

De plus, outre que les nanoparticules d'électrocatalyseur subissent une corrosion électrochimique combinée à un vieillissement de type maturation d'Ostwald au cours du fonctionnement d'une PEMFC, les phénomènes physiques suivants se produisent et concourent aussi à faire évoluer la structure et la composition chimique de l'électrocatalyseur :

1) Le support carboné est fortement oxydé lors de certains modes de sollicitation de la PEMFC, comme les périodes d'arrêt et de démarrage de celle-ci.

2) Les cristallites d'électrocatalyseur ne sont pas immobiles à la surface du support carboné mais coalescent après diffusion superficielle («migration des cristallites »). Ce phénomène peut être accéléré par la corrosion du support carboné.

Les documents:

- DUBAU L ET AL: "Further insights into the durability of PtCo/C electrocatalysts: Formation of hollow Pt nanoparticles induced by the Kirkendall effect", ELECTROCHIMICA ACTA, ELSEVIER SCIENCE PUBLISHERS, BARKING, GB, vol. 56, no. 28, 15 mars 2011 (2011-03-15), pages 10658-10667, ISSN: 0013-4686, DOI: 10.1016/J.ELECTACTA.2011.03.073
- WO 2012/009467 A1
- JP 2007 207679 A
- KR 100 728 199 B1

se rapportent à l'art antérieur.

La présente invention se propose de remédier aux problèmes de vieillissement de type maturation d'Ostwald et de corrosion électrochimique des nanoparticules sur support de carbone d'électrocatalyseur de piles à combustible telles que des PEMFC évoqués ci-dessus en fournissant des nanoparticules d'électrolyseur de stabilité augmentée.

Pour ce faire, les inventeurs de la présente invention ont mis au point de nouvelles nanoparticules d'électrocalyseur exhibant les propriétés physiques remarquables suivantes :

1) elles sont creuses ;

2) leur taille moyenne a été augmentée par rapport à des nanoparticules d'électrocatalyseur actuellement utilisées ;

3) elles ne comportent pas d'élément d'alliage de type métal non-noble;

4) leur nombre d'atomes de faible coordination (plus sensibles

De préférence, la nanoparticule comprend une cavité centrale unique.

Ainsi, les nanoparticules d'électrocatalyseur selon l'invention présentent les avantages suivants par rapport à celles actuellement utilisées dans des piles à combustible telles que des PEMFC:

1) Elles sont beaucoup plus actives pour la réaction de réduction de l'oxygène ;

2) Elles comportent une masse de platine limitée ; et

3) Elles sont de durabilité accrue.

Préférentiellement, la cavité centrale de la nanoparticule selon l'invention a un diamètre compris entre 2 nm et 10 nm, de préférence entre 2 nm et 5 nm. Cela présente pour avantage une bonne dispersion du platine au sein de la nanoparticule.

La dispersion est le rapport entre le nombre $N_{surface}$ d'atomes de platine présents à la surface et le nombre $N_{total}$ total d'atomes contenus dans une nanoparticule. Plus la dispersion est grande, plus le nombre d'atomes de platine électrocatalytiquement actifs, c'est-à-dire ceux qui sont situés à la surface du matériau est important. Si, pour une masse de platine donnée, il est possible d'optimiser la dispersion des atomes, l'activité de l'électrode résultante sera d'autant plus importante.

La dispersion selon l'invention est proche de celle de petites nanoparticules pleines de platine, mais avec une activité intrinsèque plus élevée. Ainsi, il n'y a pas de perte de surface active électrocatalytique avec les nanoparticules selon l'invention et l'activité massique effective (courant rapporté à la masse totale de platine) est plus importante.

De plus, du fait du vide à l'intérieur de la coquille, le paramètre de maille de la coquille constituée de platine est légèrement contracté par rapport à des nanoparticules de platine pleines de taille équivalentes. Ce pourcentage de contraction n'excède pas 0,5%.

Autrement dit, la surface externe des nanoparticules selon l'invention est peu ou pas facettée.

Ainsi, la nanoparticule selon l'invention comprend un nombre d'atomes de faible coordination inférieur à 10% du nombre total d'atomes de surface. De préférence, la nanoparticule selon l'invention possède un nombre d'atomes de faible coordination inférieur à 5% du nombre total d'atomes de surface, et encore plus préférentiellement, elle ne comprend aucun atome de faible coordination.

En effet, il est tout à fait avantageux de limiter le nombre d'atomes de faible coordination pour les raisons suivantes :

1) Les atomes de faible coordination, ayant moins de voisins directs que ceux contenus dans le volume d'une nanoparticule de platine pleine, sont sensibles à l'adsorption d'espèces oxygénées de surface, qui sont des poisons pour la réaction de réduction de l'oxygène. C'est pourquoi, une diminution de leur concentration surfacique engendre une augmentation de l'activité électrocatalytique des nanoparticules pour la réaction de réduction de l'oxygène.

2) De plus, ces sites de faible coordination initient la réaction de dissolution des atomes de platine et engendrent donc une résistance à la corrosion amoindrie.

La présente invention a aussi pour objet un procédé de fabrication de nanoparticules creuses de platine telles que décrites ci-dessus qui comprend les étapes suivantes :

a) On dispose de nanoparticules multi-métalliques sur support de carbone de type $Pt_xM/C$, avec x compris entre 0,2 et 10 (de préférence entre 0,5 et 3) et M étant un métal moins noble que le platine dans un dispositif configuré pour soumettre ces nanoparticules à une séquence de polarisations;

b) On effectue une séquence de polarisations sur lesdites nanoparticules entre les deux potentiels suivants :

- un potentiel réducteur, compris entre 0 et 0,5 V/RHE (à savoir mesuré par rapport à une électrode à hydrogène réversible) et
- un potentiel oxydant compris entre 0,9 et 3 V/RHE (à savoir mesuré par rapport à une électrode à hydrogène réversible), jusqu'à l'obtention de nanoparticules creuses monocristallines de platine de diamètre compris entre 3 nm et 20 nm et dont la coquille est dense avec une épaisseur comprise entre 0,2 et 5 nm.

Le métal M est avantageusement choisi dans le groupe constitué par le scandium, l'yttrium, le titane, le zirconium, le vanadium, le niobium, le tantale, le chrome, le molybdène, le tungstène, le manganèse, le rhénium, l'iridium, le fer, le ruthénium, l'osmium, le cobalt, le rhodium, le nickel, le palladium, le cuivre, l'argent, l'or, le zinc et le cadmium.

De préférence, à l'étape a) du procédé selon l'invention, on dispose des nanoparticules sur support de carbone (nanoparticules supportées de type $Pt_3Co/C$).

De manière avantageuse, la séquence de polarisations de l'étape b) du procédé selon l'invention s'effectue avec :

- une succession de rampes linéaires de potentiels (montantes et descendantes) à une vitesse de balayage en potentiel dans la gamme 1 - 1000 mV s$^{-1}$ ;
- une succession de paliers de potentiels de durée comprise entre 1 s et 36000 s ; ou
- un mélange de rampes et de paliers pour les phases montantes (respectivement descendantes) de potentiel.

Dans un mode de réalisation avantageux de l'invention, on utilise une séquence de polarisations rectangulaires, autrement dit un profil dont les caractéristiques sont les suivantes :

- un potentiel réducteur compris entre 0,05 V/RHE et 0,5 V/RHE, de préférence entre 0,2 V/ RHE et 0,4 V/RHE ;
- un potentiel oxydant compris entre 0,60 V/RHE et 1,4 V/RHE, de préférence entre 0,8 V/RHE et 1 V/RHE.

Les périodes passées au potentiel réducteur doivent être suffisamment longues pour la migration des atomes M différents du platine, par exemple le cobalt dans le cas de nanoparticules sur support de carbone de type $Pt_3Co/C$, du centre de ladite nanoparticule vers la région à proximité de la surface de celle-ci. Avantageusement, le temps passé au potentiel réducteur est compris entre 5 minutes et 10 heures, de préférence entre 30 minutes et 2 heures.

Les périodes passées au potentiel oxydant doivent être un compromis entre les aspects suivants :

- Elles doivent être suffisamment longues pour oxyder le métal différent du platine (par exemple le cobalt dans le cas de $Pt_3Co/C$) présent dans la région à proximité de la surface de la nanoparticule, mais
- Elles doivent être courtes pour ne pas dégrader la structure de la nanoparticule (en corrodant les atomes de platine de la nanoparticule).

Le temps passé au potentiel oxydant est avantageusement compris entre 10 secondes et 1 heure, de préférence entre 30 secondes et 10 minutes.

La durée de l'étape b) du procédé de fabrication selon l'invention est primordiale et doit être préférentiellement suffisante pour que le ou les métaux M différents du platine (par exemple le cobalt dans le cas de nanoparticules de type $Pt_3Co/C$) que contiennent les nanoparticules soient lessivés desdites nanoparticules.

L'étape b) est menée dans une solution électrolytique qui peut être :

- une solution acide qui comprend au moins un acide, de préférence choisi dans le groupe constitué par l'acide acétique, chlorhydrique, nitrique, sulfurique, perchlorique, bromhydrique, iodhydrique ou des mélanges de ces acides, avec une concentration comprise entre $10^{-3}$ et $5$ mol.L$^{-1}$, de préférence entre $0,1$ et $1$ mol.L$^{-1}$ ;
- une solution basique, de préférence une solution de soude, potasse ou un mélange de ces bases, avec une concentration comprise entre $10^{-3}$ et $5$ mol.L$^{-1}$, de préférence entre $0,1$ et $1$ mol.L$^{-1}$ ;
- un électrolyte polymère échangeur d'ions tel que le NAFION ®.

Par effet Kirkendall, au cours de l'étape b) du procédé de fabrication selon l'invention, les métaux M diffusent plus vite que les atomes de platine quand les nanoparticules sont dans un environnement oxydant. Les forces motrices pour le phénomène de diffusion des atomes des métaux M vers la surface de la nanoparticule sont les suivantes :

- le gradient de potentiel chimique au sein de la nanoparticule, dont la surface est pauvre en métal M car cet élément se dissout instantanément en environnement acide, dont le coeur est plus riche en métaux M ;
- le taux de recouvrement élevé en espèces oxygénées (les métaux M étant moins nobles que le platine, ils possèdent une enthalpie standard de formation des oxydes MO, $M_2O_3$, $MO_2$) plus négative que celle observée sur du platine.

Puisque chaque atome de métal M qui atteint la surface de la nanoparticule est corrodé en un ion $M^{y+}$, ces deux forces persistent au cours du temps.

A cet égard, il faut savoir que l'effet Kirkendall se produit dans des matériaux bimétalliques AB dans lesquels un élément A diffuse plus vite que l'élément B. Si le flux de A possède une direction privilégiée (généralement du coeur du matériau vers sa surface), un flux de lacunes pénètre dans le matériau en sens inverse afin de compenser le flux d'atomes A. Ces lacunes agrègent en formant des cavités de taille variable.

De manière avantageuse, on réalise l'étape b) jusqu'à l'obtention de nanoparticules creuses monocristallines de platine de diamètre compris entre $3$ nm et $10$ nm et dont la coquille est dense avec une épaisseur comprise entre $0,277$ nm et $0,831$ nm (à savoir $1$ à $3$ couches atomiques de platine).

Dans un mode de réalisation préféré, l'étape b) du procédé selon l'invention dure entre $48$ heures et $100$ heures, de préférence entre $54$ heures et $72$ heures, avec une durée de chaque potentiel réducteur de $10$ minutes à $2$ heures, préférentiellement de $45$ minutes à $1$ heure et $15$ minutes, et celle de chaque potentiel oxydant de $1$ à $10$ minutes, préférentiellement de $3$ à $6$ minutes.

Le procédé selon l'invention peut en outre comprendre une étape c) à l'issue de l'étape b) au cours de laquelle on nettoie lesdites nanoparticules dans une solution acide.

L'étape c) du procédé de fabrication de nanoparticules selon l'invention permet de s'affranchir de la présence d'ions $M^{z+}$ après l'étape b).

De manière préférée, à l'étape c) du procédé selon l'invention, la solution acide comprend au moins un acide qui est choisi dans le groupe constitué par l'acide acétique, chlorhydrique, nitrique, sulfurique, perchlorique, bromhydrique, iodhydrique ou des combinaisons de ces acides.

Préférentiellement, l'étape c) est réalisée à une température comprise entre $20°C$ et $80°C$, en deux à trois lavages successifs avec de l'acide initialement sans impuretés à chaque lavage. La quantité d'acide utilisée à l'étape c) est avantageusement comprise entre $0,01$ L et $1$ L, de préférence entre $0,05$ L et $0,2$ L. La durée du nettoyage suffisante pour évacuer tous les sels métalliques est avantageusement comprise entre $10$ minutes et deux heures, de préférence entre $15$ et $30$ minutes.

Dans un autre mode de réalisation de l'invention, le procédé de fabrication de nanoparticules selon l'invention peut en outre comprendre une étape c') de post-traitement qui est réalisée :

- soit directement à l'issue de l'étape b), lorsque le procédé ne comprend pas d'étape c) ;
- soit à l'issue de l'étape c), lorsque le procédé comprend cette étape c).

L'étape c') de post-traitement du procédé est réalisée pour favoriser la mobilité des atomes de platine à courte échelle. Cette mobilité des atomes de platine a pour effet de combler les lacunes de la coquille de la nanoparticule creuse de platine de manière à lisser sa surface. L'étape c') permet d'éliminer les atomes de faible coordination.

Au fur et à mesure du post-traitement de l'étape c'), de par le déplacement des atomes de platine, les lacunes ont tendance à fusionner entre elles et à se déplacer vers le centre creux de la nanoparticule. Autrement dit, cette étape de post-traitement a aussi pour effet de densifier la coquille de la nanoparticule creuse de platine selon l'invention.

Dans un mode de réalisation de l'invention, l'étape c') consiste en un passage dans un four à une température contrôlée comprise entre $100$ et $600°C$, de préférence $120$ et $350°C$, pendant une durée comprise entre $10$ minutes et $10$ heures, de préférence entre $30$ minutes et $2$ heures.

Avantageusement, cette étape c') est réalisée sous atmosphère contrôlée :

- neutre (avec de l'argon), ou
- oxydante (air ou dioxygène), ou
- réductrice (mélange d'argon et de dihydrogène ou dihydrogène ou monoxyde de carbone).

De préférence, l'atmosphère contrôlée est oxydante, le gaz étant avantageusement du dioxygène.

Ce mode de réalisation de l'étape c') permet de densifier la coquille de nanoparticule creuse de platine et de la lisser.

Dans un autre mode de réalisation de l'invention, l'étape c') est un post-traitement électrochimique qui consiste à effectuer une séquence de polarisations dans une solution électrolytique différente de la solution électrolytique de l'étape b) et qui peut être :

- une solution acide qui comprend au moins un acide, de préférence choisi dans le groupe constitué par l'acide acétique, chlorhydrique, nitrique, sulfurique, perchlorique, bromhydrique, iodhydrique ou des mélanges de ces acides, avec une concentration comprise entre $10^{-3}$ et 5 mol.L$^{-1}$, de préférence entre 0,1 et 1 mol.L$^{-1}$ ;
- une solution basique, de préférence une solution de soude, potasse ou un mélange de ces bases, avec une concentration comprise entre $10^{-3}$ et 5 mol.L$^{-1}$, de préférence entre 0,1 et 1 mol.L$^{-1}$ ;
- une résine échangeuse d'ions telle que le NAFION ®.

La solution électrolytique de l'étape c') utilisée est une solution électrolytique régénérée ou bien neuve par rapport à la solution électrolytique utilisée pendant l'étape b). Autrement dit, la solution électrolytique de l'étape c') est exempte de traces de métaux non-nobles.

La séquence de polarisations s'effectue avec :

- une succession de rampes linéaires de potentiels (montantes et descendantes) à une vitesse de balayage en potentiel dans la gamme 1 - 1000 mV s$^{-1}$ ;
- succession de paliers de potentiels de durée comprise entre 1 s et 36000 s ; ou
- un mélange de rampes et de paliers pour les phases montantes (respectivement descendantes) de potentiel.

De manière préférée, on utilise une séquence de polarisations rectangulaires, autrement dit un profil dont les caractéristiques sont les suivantes :

- le potentiel réducteur est compris entre 0,05 V/RHE et 0,5 V/RHE, de préférence entre 0,2 V/ RHE et 0,4 V/RHE ;
- le potentiel oxydant compris entre 0,60 V/RHE et 1,4 V/RHE, de préférence entre 0,8 V/RHE et 1 V/RHE.

De préférence, dans ce mode de réalisation de l'invention, l'étape c') est réalisée sous atmosphère contrôlée :

- neutre (avec de l'argon), ou
- oxydante (air ou dioxygène), ou
- réductrice (mélange d'argon et de dihydrogène ou dihydrogène ou monoxyde de carbone).

Avantageusement, l'atmosphère contrôlée est oxydante, le gaz étant avantageusement du dioxygène.

Ce mode de réalisation de l'étape c') permet aussi de lisser la nanoparticule creuse de platine selon l'invention.

Lorsque l'étape c') est réalisée sous atmosphère contrôlée, comme évoqué ci-dessus, les gaz de l'atmosphère interagissent avec la surface de la nanoparticule creuse de platine et favorise ainsi la mobilité des atomes de platine.

Dans un premier mode de réalisation du procédé de fabrication selon l'invention, le dispositif configuré pour soumettre les nanoparticules à une séquence de polarisations consiste en une électrode (par exemple, une couche active déposée sur un embout d'électrode à disque tournant, une électrode à diffusion des gaz, une électrode volumique, une électrode à pâte de carbone) ou en un assemblage membrane-électrodes d'une pile à combustible qui comprend des nanoparticules sur support de carbone de type Pt$_x$M/C, de manière préférée de type Pt$_3$Co/C comme électrocatalyseur. Un tel dispositif est commercialisé et donc parfaitement à la portée de l'homme du métier.

En d'autres termes, ce premier mode de réalisation correspond à la fabrication *in situ* de nanoparticules à partir d'un électrocatalyseur de type Pt$_x$M/C dit « commercial » qui a été intégré dans une électrode ou un assemblage membrane-électrodes d'une pile à combustible. Le procédé de fabrication selon l'invention consiste alors en un vieillissement accéléré et approprié de l'électrocatalyseur de la pile à combustible pour obtenir un électrocatalyseur avec des nanoparticules creuses de platine exhibant des propriétés de durabilité et d'activité catalytique meilleures que les électrocatalyseurs commerciaux cités ci-dessus de type Pt$_x$M/C comme le Pt$_3$Co/C.

Dans un deuxième mode de réalisation du procédé, le dispositif configuré pour soumettre les nanoparticules à une séquence de polarisations consiste en un tambour conducteur rotatif. Les nanoparticules sur support de carbone

de type $Pt_xM/C$ (de préférence des nanoparticules $Pt_3Co/C$) sont disposées dans le tambour conducteur rotatif et baignent dans un électrolyte qui comprend avantageusement un acide, de préférence un acide à une concentration comprise entre 0,05 et 6 mol/L, encore plus préférentiellement entre 0,1 et 1 mol/L, ledit acide étant avantageusement choisi dans le groupe constitué par l'acide sulfurique, perchlorique, chlorhydrique, nitrique ou un mélange de ces acides.

Dans ce deuxième mode de réalisation du procédé selon l'invention, la vitesse du tambour conducteur rotatif peut être très lente, à savoir de l'ordre 1 tr.min$^{-1}$, et ce de manière à mélanger lentement les nanoparticules tout en conservant un bon contact électronique entre les nanoparticules et le collecteur du courant (à savoir le tambour).

En d'autres termes, ce deuxième mode de réalisation correspond à la fabrication *ex situ* de nanoparticules sur support de carbone à partir d'un électrocatalyseur de type $Pt_xM/C$ dit « commercial » qui n'avait pas encore été intégré dans une électrode ou un assemblage membrane-électrodes d'une pile à combustible.

De plus, la mise en oeuvre de ce deuxième mode de réalisation est effectuée exclusivement sur les nanoparticules sur support de carbone et non pas sur les autres composants de la pile à combustible. Cela présente l'avantage d'éviter de « dégrader » les autres composants de la pile à combustible, tels que la membrane échangeuse de protons et les électrodes, pendant l'étape b) du procédé de fabrication selon l'invention.

Dans un mode de réalisation de l'invention, les nanoparticules de type $Pt_xM/C$ utilisées comme matériaux de départ du procédé de fabrication selon l'invention ont été obtenues par voie chimique de la manière suivante :

a') On fabrique des nanoparticules colloïdales d'un métal M sur support de carbone, à savoir de type M/C, le métal M étant moins noble que le platine, à partir de sels métalliques $M^{z+}$, et ce de préférence par une méthode :

- d'imprégnation/réduction par voie chimique,
- d'imprégnation/réduction par voie électrochimique,
- de microémulsion eau/huile/tensio-actif,
- ou bien par la méthode des colloïdes de Bônneman.

b') On réalise un dépôt de platine sur les nanoparticules obtenues à l'issue de l'étape a').

Dans le cadre de la présente invention, la préparation de nanoparticules colloïdales par une technique de microémulsion eau/huile/tensio-actif peut être une méthode telle que décrite dans la publication intitulée Water-in-oil Microemulsion Synthesis of Platinum-Ruthenium Nanoparticles, their Characterization and Electrocatalytic Properties, de Zhang et al., Chem. Mater. 2003, 15, 451-459.

La publication intitulée Nanoscale colloidal metals and alloys stabilized by solvents and surfactants Préparation and use as catalyst precursors de Bônneman et al., Journal of Organometallic Chemistry 1996, 520, 143-162 décrit la préparation de nanoparticules colloïdales par la méthode des colloïdes de Bônneman.

La publication Formation, microstructural characteristics and stability of carbon supported platinum catalysts for low temperature fuel cells, de Antolini et al., Journal of Materials Science 2003, 38, 2995-3005 décrit la préparation de nanoparticules par des techniques d'imprégnation/réduction par voie chimique.

La publication In situ electrochemical déposition of Pt nanoparticles on carbon and inside Nafion, de Antoine et al., Electrochemical and Solid-State Letters, 2001, 4, A55-A58 décrit la préparation de nanoparticules par imprégnation/réduction électrochimique.

Le métal M est avantageusement choisi dans le groupe constitué par le scandium, l'yttrium, le titane, le zirconium, le vanadium, le niobium, le tantale, le chrome, le molybdène, le tungstène, le manganèse, le rhénium, l'iridium, le fer, le ruthénium, l'osmium, le cobalt, le rhodium, le nickel, le palladium, le cuivre, l'argent, l'or, le zinc et le cadmium.

Les méthodes de microémulsion et de colloïdes de Boenneman sont particulièrement appropriées, car elles permettent d'obtenir des particules présentant une distribution detaille de particule étroite.

Une fois revêtues de platine, les nanoparticules obtenues à l'issue de l'étape b') sont tout à fait avantageuses comme matériaux de départ pour le procédé de fabrication de nanoparticules creuses de platine selon l'invention qui a été détaillé ci-dessus.

Le tensio-actif utilisé au cours de l'étape a') est préférentiellement du 2-dodexyéthanol (commercialisé sous le nom commercial BRIJ 30) qui peut être ensuite éliminé par un simple lavage avec un solvant approprié à l'issue de l'étape a'). Cela permet d'éviter tout traitement thermique constituant une source de frittage des nanoparticules.

Les sels métalliques $M^{z+}$ utilisés sont préférentiellement des sels chlorés.

Au cours de l'étape a'), de manière préférée, les sels métalliques $M^{z+}$ sont dissous dans de l'eau qui constitue la phase aqueuse. La phase organique est constituée du mélange d'un tensio-actif (de préférence le 2-dodexyéthanol) avec un solvant organique tel que le n-heptane.

Au cours de l'étape a'), il y a réduction des sels métalliques $M^{z+}$.

Le dépôt de platine est ensuite avantageusement réalisé à la surface des nanoparticules obtenues à l'issue de l'étape a') par voie électrochimique ou chimique, et ce à partir d'un sel de $Pt^{z+}$ en milieu aqueux.

Dans un mode de réalisation avantageux de l'invention, le dépôt de platine consiste en :

- l'adsorption en sous potentiel de cuivre à la surface des nanoparticules obtenues à l'issue de l'étape a') de manière à recouvrir lesdites nanoparticules d'une monocouche de cuivre, suivie
- du déplacement galvanique de ladite couche de cuivre par une monocouche de platine à partir d'une solution $Pt^{z+}$.

L'adsorption en sous potentiel de cuivre peut être réalisée avec la méthode d'Adzic décrite dans la publication intitulée Platinum Monolayer Fuel Cell Electrocatalysts, Adzic et al. Top. Catal 2007, 46, 249-262.

Au cours de cette méthode, une monocouche de cuivre est déposée en sous potentiel, par exemple à 0,32 V à la surface de la nanoparticule de métal M. C'est une réaction limitée à une monocouche. De par la différence des potentiel redox des couples $Pt^{2+}/Pt$ et $Cu^{2+}/Cu$, les atomes de cuivre sont, dans un deuxième temps, échangés spontanément par des atomes de platine par simple immersion des particules dans une solution électrocatalytique contenant un sel de platine. Le sel de platine utilisé peut être le $K_2PtCl_4$ pour que les degrés d'oxydation du platine et celui du cuivre soient identiques, garantissant ainsi un échange atome par atome. Ce processus permet un contrôle de l'épaisseur de la coquille de platine, car il peut être réitéré en fonction du nombre de monocouches de platine souhaitées. Autrement dit, l'épaisseur de la coquille de platine est précisément ajustée.

Pendant l'étape de déplacement galvanique, le sel de platine $Pt^{z+}$ utilisé est avantageusement un complexe aminé ou chloruré, et ce à une concentration comprise entre 0,0001 et 5 mol/L, de préférence entre 0,001 et 1 mol/L. Le sel de platine est mis en contact à une température comprise entre 10 et 80°C, de préférence entre 20 et 40°C, sous agitation mécanique avec les nanoparticules de métal M sur support de carbone, sur lesquelles une monocouche de cuivre a préalablement été déposée en sous-potentiel, ce qui favorise la dissolution du cuivre en ion métallique $Cu^{2+}$ catalysée par les ions du sel de platine $Pt^{z+}$ qui se déposent, suivant la réaction de déplacement galvanique : $Pt^{2+} + Cu$ -> $Pt + Cu^{2+}$.

Dans un autre mode de réalisation de l'invention, le platine est déposé sur les nanoparticules sur support de carbone de type M/C obtenues à l'issue de l'étape a') par la technique de la cémentation directe. La cémentation directe est réalisée avantageusement en milieu acide à un pH compris entre 1 et 5, de préférence entre 0 et 3 et conduit directement (et conjointement) au dépôt de platine et à la dissolution en $M^{y+}$ des atomes de métal non noble sous-jacents, suivant la réaction : $Pt^{2+} + M$ -> $Pt + M^{2+}$.

Une fois les nanoparticules $Pt_xM/C$ obtenues, un cyclage en potentiel approprié comme expliqué ci-dessus selon l'étape b) du procédé de fabrication permet l'obtention des nanoparticules creuses de type Pt/C.

La présente invention a aussi pour objet l'utilisation de nanoparticules creuses de platine telles que décrites ci-dessus comme électrocatalyseur pour tout dispositif tel que des piles à combustible qui fonctionnent à basse température, de préférence à une température inférieure à 250°C. Il peut s'agir de piles :

- alcalines, de type AFC ;
- à acide phosphorique, de type PAFC,
- à membrane échangeuse de protons, par exemples de types PEMFC, HT-PEMFC ;
- à oxydation directe d'alcool, par exemples de types DMFC, DEFC ;
- à oxydation directe d'autres composés organiques légers ;
- à oxydation directe de borohydrure, par exemple de type DBFC.

Plus généralement, les nanoparticules creuses de platine selon l'invention peuvent être utilisées dans tout dispositif fonctionnant à basse température, de préférence à une température inférieure à 250°C, parmi lesquels on peut citer :

- les électrolyseurs de génération d'hydrogène (technologie alcaline, PEM, Westinghouse) ;
- les électrolyseurs de génération de produits chlorés (électrolyse chlore-soude, chlorate, perchlorate) ;
- les électrolyseurs de génération de peroxyde d'hydrogène ;
- les capteurs à gaz réducteur (monoxyde de carbone, méthane, hydrogène, etc.) ou oxydant (oxygène, ozone, dioxyde de carbone, etc.) ;
- les batteries métal-air (Al-air, Zn-air, Li-air).
- tout autre dispositif utilisant une cathode à réduction de l'oxygène fonctionnant à une température inférieure à 250°C.

**Description des figures :**

La figure 1 est un graphe indiquant la distance interatomique (exprimée en nanomètres) des nanoparticules d'un électrocatalyseur cathodique en fonction de la durée d'utilisation d'une PEMFC en fonctionnement réel.

La figure 2 est un graphe exprimant l'activité électrocatalytique d'un électrocatalyseur comprenant soit des nanoparticules de platine creuses obtenues après plus de 1000 heures d'utilisation d'une PEMFC en fonctionnement réel, soit des nanoparticules d'électocatalyseurs commerciaux de type Pt/C et de type $Pt_3Co/C$.

La figure 3 représente un spectre de diffraction des rayons X de nanoparticules creuses de platine selon l'invention.

Des nanoparticules creuses de platine ont été obtenues de la manière suivante :

Une PEMFC a été utilisée pendant 3500 heures dans les conditions suivantes :

- Electrocatalyseur cathodique de type $Pt_3Co/C$, air humidifié (65% humidité relative, 1,1 bar absolu, stoechiométrie 2,5) ;
- Electrocatalyseur anodique: dihydrogène pur (0% humidité relative, 1,3 bar absolu, mode bouché (dead-end mode) stoechiométrie 2,5) ;
- Température de 70°C ;
- Courant d'intensité de 50 ampères.

L'électrocatalyseur cathodique a été observé par microscope électronique en mode balayage en transmission avec un détecteur champ sombre annulaire à grand angle (STEM-HAADF).

Le STEM-HAADF est une technique permettant de caractériser les nanoparticules bimétalliques, car elle fournit des images comportant une information chimique, appelée image en « contraste de Z » (Z étant le numéro atomique de l'élément).

Dans ce mode d'imagerie, l'intensité de l'image (I) d'une colonne atomique est en première approximation, proportionnelle au produit du nombre (N) des atomes présents dans la colonne atomique et au carré du numéro atomique Z moyen des atomes la constituant :

$$\boxed{I_{HAADF} = k\,N\,Z^{\alpha}} \qquad \text{Equation 2}$$

Où $k$ est une constante et $\alpha \sim 2$.

L'analyse de l'électrocatalyseur cathodique après environ 1000 heures de fonctionnement de la PEMFC a montré la présence de deux types de nanoparticules :

- Certaines des nanoparticules possédaient une coquille brillante recouvrant un coeur plus sombre, généralement avec une grande différence d'intensité entre le coeur et la coquille. Il s'agissait de particules creuses.
- Le reste des nanoparticules possédaient une structure similaire à celle de l'électrocatalyseur cathodique de type $Pt_3Co/C$ (contraste homogène en HAADF). Il s'agissait de particules pleines.

Après 3500 heures de fonctionnement de la PEMFC, la fraction de nanoparticules creuses de platine a été estimée à environ 35 % du nombre total de nanoparticules, ce qui permet de déduire que du point de vue structurel, ces nanoparticules sont stables sur le long terme dans les conditions de fonctionnement réel d'une PEMFC.

Il y avait toujours, même après 3500 heures de fonctionnement de la PEMFC, coexistence de nanoparticules creuses et de nanoparticules pleines. Cela s'explique par le fait qu'une fraction restreinte d'électrocatalyseur (de l'ordre de 20% à 50%) est réellement active pour la réaction cathodique. Seules les nanoparticules satisfaisant la condition du contact triple : à savoir les nanoparticules en contact avec le carbone et l'ionomère sont susceptibles d'être actives. A cette limitation s'ajoute d'autres limitations reliées aux conditions dynamiques de fonctionnement de la PEMFC.

C'est pourquoi, dans le cadre de la présente invention, il est particulièrement avantageux de fabriquer des nanoparticules creuses de platine, par exemple tel que cela a été décrit ci-dessus dans le mode de réalisation de l'invention par voie chimique, avant de les incorporer dans un assemblage membrane-électrodes plutôt que de fabriquer *in situ* des nanoparticules à partir d'un électrocatalyseur de type $Pt_xM/C$ dit « commercial ». De cette manière, l'électrocatalyseur ne comprend que des nanoparticules creuses de platine, ce qui ne sera probablement jamais le cas si l'on utilise un électrocatalyseur de type $Pt_xM/C$ dit « commercial » déjà mis en oeuvre dans une électrode ou dans un assemblage membrane-électrodes.

De plus, la contraction du paramètre de maille de la coquille des nanoparticules creuses de platine a été déterminée.

Aucune relaxation du paramètre de maille du platine n'a été observée jusqu'à des durées voisines de 3500 heures.

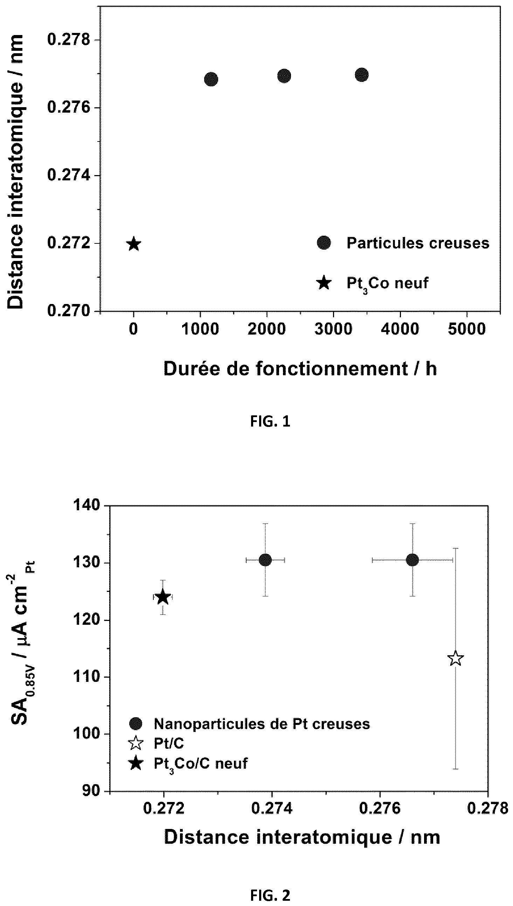

Le graphe de la figure 1 montre que le paramètre de maille de la coquille des nanoparticules creuses de platine est légèrement contracté par rapport à celui de nanoparticules de platine de taille équivalente. Cette contraction se maintient sur le long terme au cours de l'utilisation de la PEMFC en fonctionnement réel.

Ainsi, les nanoparticules creuses de platine, une fois formées, sont stables sur une période de 2500 heures, alors que des nanoparticules pleines de platine de type Pt/C ou de type $Pt_xM/C$ seraient largement modifiées dans des conditions identiques.

Mesure de l'activité électrocatalytique :

La mesure de l'activité spécifique (rapportée à 1 $cm^2$ de platine) pour la réaction de réduction de l'oxygène a été réalisée en utilisant une méthodologie classique en électrocatalyse.

Pour ce faire, un film de quelques micromètres d'épaisseur constitué de l'électrocatalyseur, tel que détaillé ci-dessus, à tester a été immobilisé à la surface d'une électrode de carbone vitreux.

Ce film a été formé par séchage d'un mélange contenant en proportions massiques identiques (50-50 wt%) l'électrocatalyseur et l'ionomère Nafion® dans de l'eau ultrapure. Ainsi, l'électrocatalyseur et l'ionomère étaient distribués de façon homogène et rendait l'essai comparable à une couche électrocatalytique d'une électrode de PEMFC.

Les activités catalytiques ont été mesurées dans des conditions identiques permettant une comparaison directe des résultats pour différents électrocatalyseurs :

- $E$ = 0,85 V/RHE
- Electrolyte aqueux: 0,1 $mol.L^{-1}$ d'acide sulfurique
- $T$ = 25°C
- $v$ = 1 mV $s^{-1}$.

La Figure 2 est un graphe montrant comparativement l'activité catalytique de :

- l'électrocatalyseur contenant des nanoparticules de platine creuses obtenues au bout de 1000 heures d'utilisation d'une PEMFC en fonctionnement réel, l'électrocatalyseur cathodique étant de type $Pt_3Co/C$ (référencé sur le graphe : « Nanoparticules de Pt creuses ») tel que décrit ci-dessus pour la figure 1,
- d'un électrocatalyseur commercial de type $Pt_3Co/C$, (référencé sur le graphe : « $Pt_3Co/C$ »),
- d'un électrocatalyseur de type Pt/C (référencé sur le graphe : « Pt/C »),

et ce en fonction de la distance interatomique desdits électrocatalyseurs (déterminée à partir des diffractogrammes X).

D'après la figure 2, l'électrocatalyseur comprenant des nanoparticules de platine creuses a une meilleure activité catalytique que des électrocatalyseurs commerciaux de type Pt/C ou $Pt_3Co/C$.

Il convient de noter que ce résultat expérimental serait exacerbé en considérant l'activité massique (rapportée à la masse de platine).

Des nanoparticules creuses de platine selon l'invention ont été fabriquées de la manière suivante :

Des nanoparticules sur support de carbone de type $Pt_3Co/C$ ont été incorporées dans un assemblage membrane-électrodes et ont été utilisées comme électrocatalyseur à la cathode d'une PEMFC.

La taille moyenne initiale de ces nanoparticules était comprise entre 3 et 5 nm et la répartition des atomes de platine et de cobalt au sein de ces nanoparticules était homogène. Ces nanoparticules étaient initialement denses.

On a effectué une séquence de polarisations sur lesdites nanoparticules entre les deux potentiels suivants :

- le potentiel réducteur choisi et appliqué pendant 30 minutes était de 0,2 V (cela correspond à la tension de cellule ou différence de potentiel entre la cathode et l'anode, lors d'un fonctionnement hydrogène (à l'anode)/ azote (à la cathode)) A cette tension, le potentiel de la cathode valait approximativement 0,2 V/RHE (à savoir mesuré par rapport à une électrode à hydrogène réversible).
- le potentiel oxydant a été atteint en effectuant 2 cycles de balayage en potentiel entre E = 0,05 V et E = 1,23 V à une vitesse v = 0,020 V/s.

Cette alternance de potentiels réducteurs et oxydants a été répétée 130 fois pendant une durée approximative de 60 heures.

Des nanoparticules creuses de platine de diamètre approximatif de 5 nm, proche de la taille initiale des nanoparticules, ont ainsi été obtenues.

La coquille était dense avec une épaisseur approximative de 1,5 nm et a été confirmée par des observations en microscopie STEM-HAADF.

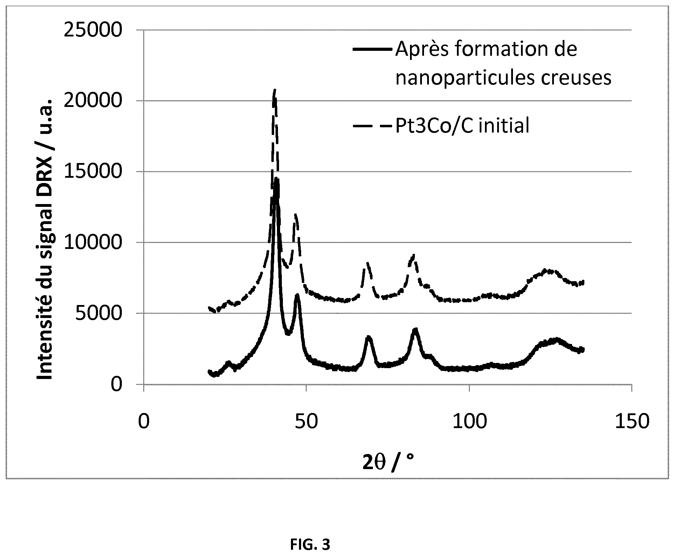

Les mesures par diffraction des rayons X de la figure 3 confirment également la formation de ces nanoparticules creuses avec une distance interatomique moyenne de 0,2758 nm plus petite (contraction du paramètre de maille) que celle mesurée sur une nanoparticule de platine de taille identique (0,2775 nm).

Le tableau 1 ci-dessous indique que l'activité spécifique des nanoparticules creuses de platine selon l'invention pour la réduction de l'oxygène ($SA_{0.85V}$ / $\mu A\ cm^{-2}{}_{Pt}$) est meilleure que celle de nanoparticules $Pt_3Co/C$.

Tableau 1. Activité spécifique pour la réaction de réduction de l'oxygène mesurée en électrolyte liquide 0,1 mol.$L^{-1}$ d'acide sulfurique à E = 0.85 V/RHE ($SA_{0.85\ V}$) et taille des nanoparticules ($d_v$)

|  | Nanoparticules $Pt_3Co/C$ | Nanoparticules creuses de platine selon l'invention |
| --- | --- | --- |
| $SA_{0.85\ V}$ ($\mu A\ cm^{-2}{}_{Pt}$) | 120 | 130 |
| $d_v$ (nm) | 5,3 | 5,7 |

Des nanoparticules creuses de platine 1 à 3 ont été préparées selon le procédé de fabrication selon l'invention.

Plus précisément, des nanoparticules de type PtNi/C utilisées comme matériaux de départ ont été obtenues par la voie chimique qui a été détaillée ci-dessus comme mode de réalisation de nanoparticules de $Pt_xM/C$.

Les nanoparticules PtNi/C ont été synthétisées par co-réduction des sels $Pt(NH_3)_4Cl_2$ et $NiCl_2$ par $NaBH_4$ en milieu aqueux.

Les étapes de la synthèse ont été les suivantes :

- On a mélangé 0,3 g de poudre de support carboné (Vulcan XC72, fourni par Cabot) avec 140 mL d'eau désionisée ultrapure (18,2 MΩ cm, quantité d'impuretés organiques totales < 5 ppb) et 10 mL d'éthanol sous agitation magnétique ;
- On a ajouté 0,46 mmol de $Pt(NH_3)_4Cl_2$ et 0.46 mmol de $NiCl_2$ à la poudre de carbone en suspension dans les solvants;
- On a ajouté de l'agent réducteur : 5 mL d'une solution de $NaBH_4$ à 0,22 mol.$L^{-1}$;
- On a agité sous agitation magnétique pendant 1 heure ;
- On a filtré et rincé abondamment avec de l'eau désionisée ultrapure ;
- On a séché à l'étuve à 110°C pendant 45 minutes.

La nature des sels conduit à leur réduction séquentielle. Le sel de nickel est réduit en premier par $NaBH_4$ et, dans un deuxième temps, la réduction des sels de platine et l'échange galvanique des atomes de nickel précédemment formés par les ions $Pt^{2+}$ se produisent simultanément conduisant à la formation de nanoparticules Pt-Ni/C creuses (avec une faible teneur en nickel).

Les nanoparticules 1 ont été obtenues après une étape b) du procédé de fabrication selon l'invention réalisée sur une couche active déposée sur un embout d'électrode tournante, selon les paramètres suivants :

- sous atmosphère d'argon ;
- électrolyte comprenant une solution de 0,1 mol.$L^{-1}$ d'acide sulfurique ;
- 20 cycles à 20 mVs$^{-1}$ avec un potentiel réducteur : 0 V/RHE et un potentiel oxydant : 1,23 V/RHE (durée totale 41 minutes).

Les nanoparticules 2 ont été obtenues après une étape b) du procédé de fabrication selon l'invention réalisée sur une couche active déposée sur un embout d'électrode tournante, selon les paramètres suivants :

- sous atmosphère d'argon ;
- électrolyte comprenant une solution de 0,1 mol L$^{-1}$ d'acide sulfurique;
- 60 cycles à 20 mVs$^{-1}$ avec un potentiel réducteur : 0 V/RHE et un potentiel oxydant: 1,23 V/RHE (durée totale 123 minutes).

Les nanoparticules 3 ont été obtenues après une étape b) du procédé de fabrication selon l'invention réalisée sur une couche active déposée sur un embout d'électrode tournante, selon les paramètres suivants :

- sous atmosphère de dioxygène ;
- 4 cycles à 2 mVs$^{-1}$ avec un potentiel réducteur 0,4 V/RHE et un potentiel oxydant: 1,05 V/RHE (durée totale 43,3 minutes).

A la différence des nanoparticules 1 et 2, pour ces nanoparticules 3, l'étape b) a été précédée d'un lavage acide pendant 12 heures dans une solution d'acide sulfurique à une concentration de 1 mol.$L^{-1}$ qui a finalisé la voie chimique détaillée ci-dessus. Cette dernière étape de lavage était destinée à éliminer les atomes de nickel résiduels présents à la surface du support carboné et non recouverts par des atomes de platine ou bien présents dans la coquille des particules creuses.

Les activités catalytiques de ces nanoparticules 1 à 3 ont été mesurées dans des conditions identiques permettant une comparaison directe des résultats :

- Electrolyte aqueux: 0,1 mol.L$^{-1}$ d'acide sulfurique
- $T$ = 25°C,
- $v$ = 2 mV s$^{-1}$.
- Mesures d'activités spécifiques à $E$ = 0,85 V/RHE et E = 0,9 V/RHE.

L'activité spécifique des nanoparticules creuses de platine 1 à 3 pour la réduction d'oxygène valait en moyenne :

- 550 $\mu$A cm$^{-2}_{Pt}$ (mesuré à $E$ = 0,85 V/RHE), contre 180 $\mu$A cm$^{-2}_{Pt}$ pour des nanoparticules pleines de type Pt/C fournies par E-TeK (à savoir un catalyseur commercial de référence E-Tek avec un support carboné identique : Vulcan XC72 fourni par Cabot, $m_{Pt}/(m_{Pt} + m_C)$ = 40%), et
- 200 $\mu$A cm$^{-2}_{Pt}$ (mesuré à E = 0,9 V/RHE), contre 50 $\mu$A cm$^{-2}_{Pt}$ pour des nanoparticules pleines de type Pt/C fournies par E-TeK (à savoir un catalyseur commercial de référence E-Tek avec un support carboné identique : Vulcan XC72 fourni par Cabot, $m_{Pt}/(m_{Pt} + m_C)$ = 40%).

L'activité spécifique des nanoparticules creuses de platine 1 à 3 pour la réduction d'oxygène est donc supérieure à :

- l'activité spécifique des nanoparticules pleines de type Pt/C, et ce avec un facteur environ 3 à 4, et aussi
- l'activité spécifique de nanoparticules Pt$_3$Co/C (cf. Tableau 1 ci-dessus).

### Revendications

1. Nanoparticule creuse de platine sur support de carbone,

   - ladite nanoparticule a un diamètre compris entre 3 nm et20nm;
   - ladite nanoparticule comprend une première cavité centrale ;
   - ladite nanoparticule ne comporte pas d'élément d'alliage de type métal non-noble;
   - ladite nanoparticule est quasi-sphérique;

   **caractérisée en ce que**

   - ladite nanoparticule comprend une coquille dense et monocristalline qui est dépourvue de porosité à l'échelle atomique, et dont l'épaisseur est comprise entre 0,2 nm et 5 nm ;
   - ladite nanoparticule comprend un nombre d'atomes de faible coordination inférieur à 10% du nombre total d'atomes de surface.

2. Nanoparticule creuse de platine sur support de carbone selon la revendication 1, **caractérisée en ce que** la cavité centrale a un diamètre compris entre 2 nm et 10 nm.

3. Procédé de fabrication de nanoparticules creuses de platine sur support de carbone selon l'une quelconque des revendications 1 à 2 qui comprend les étapes suivantes :

   a) On dispose de nanoparticules multi-métalliques sur support de carbone de type Pt$_x$M/C, avec x compris entre 0,2 et 10 et M étant un métal moins noble que le platine, dans un dispositif configuré pour soumettre les nanoparticules à une séquence de polarisations ;
   b) On effectue une séquence de polarisations sur lesdites nanoparticules entre les deux potentiels suivants :

   - un potentiel réducteur, compris entre 0 et 0,5 V/RHE (V/RHE signifiant que le potentiel est mesuré par rapport à une électrode à hydrogène réversible) et
   - un potentiel oxydant compris entre 0,9 et 3 V/RHE, jusqu'à l'obtention de nanoparticules creuses monocristallines de platine de diamètre compris entre 3 nm et 20 nm dont la coquille est dense avec une épaisseur comprise entre 0,2 nm et 5 nm,

l'étape b) étant menée dans une solution électrolytique.

4. Procédé de fabrication selon la revendication 3, **caractérisé en ce qu'**on réalise l'étape b) jusqu'à l'obtention de nanoparticules creuses monocristallines de platine de diamètre compris entre 3 nm et 10 nm et dont la coquille est dense avec une épaisseur comprise entre 0,277 nm et 0,831 nm.

5. Procédé de fabrication selon l'une quelconque des revendications 3 à 4, **caractérisé en ce que** la séquence de polarisations de l'étape b) du procédé selon l'invention s'effectue avec :

- une succession de rampes linéaires de potentiels montantes et descendantes à une vitesse de balayage en potentiel dans la gamme 1-1000 mV s$^{-1}$ ;
- une succession de paliers de potentiels de durée comprise entre 1 s et 36000 s ; ou
- un mélange de rampes et de paliers pour les phases montantes, respectivement descendantes, de potentiel.

6. Procédé de fabrication selon l'une quelconque des revendications 3 à 5, **caractérisé en ce que** la séquence de polarisations a un profil rectangulaire, dont :

- le potentiel réducteur est compris entre 0,05 V/RHE et 0,5 V/RHE;
- le potentiel oxydant est compris entre 0,60 V/RHE et 1,4 V/RHE.

7. Procédé de fabrication selon l'une quelconque des revendications 3 à 6, **caractérisé en ce que** le dispositif configuré pour soumettre les nanoparticules à une séquence de polarisations consiste en une électrode ou un assemblage membrane-électrodes d'une pile à combustible.

8. Procédé de fabrication selon l'une quelconque des revendications 3 à 6, **caractérisé en ce que** le dispositif configuré pour soumettre les nanoparticules à une séquence de polarisations consiste en un tambour conducteur rotatif.

9. Procédé de fabrication selon l'une quelconque des revendications 3 à 8, **caractérisé en ce que** les nanoparticules multi-métalliques sur support de carbone de type PtxM/C sont obtenues de la manière suivante :

a') On fabrique des nanoparticules colloïdales d'un métal M sur support de carbone, à savoir de type M/C, le métal M étant moins noble que le platine, à partir de sels métalliques M$^{z+}$.
b') On réalise un dépôt de platine sur les nanoparticules obtenues à l'issue de l'étape a').

10. Procédé de fabrication selon l'une quelconque des revendications 3 à 9, **caractérisé en ce qu'**il comprend une étape c) à l'issue de l'étape b) au cours de laquelle on nettoie lesdites nanoparticules dans une solution acide.

11. Procédé de fabrication selon l'une quelconque des revendications 3 à 9 ou selon la revendication 10 lorsque le procédé de fabrication comprend l'étape c), **caractérisé en ce qu'**il comprend en outre une étape c') de post-traitement consistant en un passage dans un four à une température contrôlée comprise entre 100 et 600°C, pendant une durée comprise entre 10 minutes et 10 heures, ladite étape c') étant réalisée :

- soit directement à l'issue de l'étape b), lorsque le procédé ne comprend pas d'étape c) ;
- soit à l'issue de l'étape c), lorsque le procédé comprend une étape c).

12. Procédé de fabrication selon l'une quelconque des revendications 3 à 9 ou selon la revendication 10 lorsque le procédé de fabrication comprend l'étape c), **caractérisé en ce qu'**il comprend une étape c') de post-traitement qui est un post-traitement électrochimique consistant à effectuer une séquence de polarisations dans une solution électrolytique différente de la solution électrolytique de l'étape b), ladite étape c') étant réalisée :

- soit directement à l'issue de l'étape b), lorsque le procédé ne comprend pas d'étape c) ;
- soit à l'issue de l'étape c), lorsque le procédé comprend cette étape c).

13. Procédé de fabrication selon l'une quelconque des revendications 11 à 12, **caractérisé en ce que** l'étape c') est réalisée sous atmosphère contrôlée neutre, oxydante ou réductrice.

14. Utilisation de nanoparticules creuses de platine sur support de carbone selon l'une quelconque des revendications 1 à 2 dans un dispositif fonctionnant à une température inférieure à 250°C, choisi dans le groupe constitué par les piles :

- alcalines, de type AFC ;
- à acide phosphorique, de type PAFC,
- à membrane échangeuse de protons ;
- à oxydation directe d'alcool ;
- à oxydation directe d'autres composés organiques légers ;
- à oxydation directe de borohydrure ;

les électrolyseurs de génération d'hydrogène; les électrolyseurs de génération de produits chlorés ; les électrolyseurs de génération de peroxyde d'hydrogène ; les capteurs à gaz réducteur ou oxydant; les batteries métal-air.

**Patentansprüche**

1. Hohler Nanopartikel aus Platin auf einem Kohlenstoffträger,

- der Nanopartikel hat einen Durchmesser, der zwischen 3 nm und 20 nm liegt;
- der Nanopartikel weist einen ersten zentralen Hohlraum auf;
- der Nanopartikel umfasst kein Legierungselement vom Typ Nichtedelmetall;
- der Nanopartikel ist fast sphärisch;

**dadurch gekennzeichnet, dass**

- der Nanopartikel eine dichte und monokristalline Hülle aufweist, die keine Porosität auf atomarer Ebene zeigt, und dessen Dicke zwischen 0,2 nm und 5 nm liegt;
- der Nanopartikel eine Anzahl von niedrig koordinierten Atomen von weniger als 10 % der Gesamtanzahl von Oberflächenatomen aufweist.

2. Hohler Nanopartikel aus Platin auf einem Kohlenstoffträger nach Anspruch 1, **dadurch gekennzeichnet, dass** der zentrale Hohlraum einen Durchmesser hat, der zwischen 2 nm und 10 nm liegt.

3. Verfahren zur Herstellung hohler Nanopartikel aus Platin auf einem Kohlenstoffträger nach einem der Ansprüche 1 bis 2, das die folgenden Schritte aufweist:

a) Anordnen von multimetallischen Nanopartikeln auf einem Kohlenstoffträger vom Typ $Pt_xM/C$, wobei x zwischen 0,2 und 10 liegt und M ein weniger edles Metall als Platin ist, in einer Vorrichtung, die konfiguriert ist, um die Nanopartikel einer Sequenz von Polarisierungen zu unterziehen;
b) Durchführen einer Sequenz von Polarisierungen auf den Nanopartikeln zwischen den zwei folgenden Potenzialen:

- einem Reduktionspotenzial, das zwischen 0 und 0,5 V/RHE liegt (wobei V/RHE bedeutet, dass das Potenzial mit Bezug auf eine reversible Wasserstoffelektrode gemessen wird), und
- ein Oxidationspotenzial, das zwischen 0,9 und 3 V/RHE liegt, bis zum Erhalt von monokristallinen hohlen Nanopartikeln aus Platin mit einem Durchmesser, der zwischen 3 nm und 20 nm liegt, deren Hülle dicht mit einer Dicke, die zwischen 0,2 nm und 5 nm liegt, ist,

wobei der Schritt b) in eine Elektrolytlösung geführt wird.

4. Verfahren zur Herstellung nach Anspruch 3, **dadurch gekennzeichnet, dass** der Schritt b) bis zum Erhalt von monokristallinen hohlen Nanopartikeln aus Platin mit einem Durchmesser, der zwischen 3 nm und 10 nm liegt, ausgeführt wird, und deren Hülle dicht mit eine Dicke, die zwischen 0,277 nm und 0,831 nm liegt, ist.

5. Verfahren zur Herstellung nach einem der Ansprüche 3 bis 4, **dadurch gekennzeichnet, dass** die Sequenz von Polarisierungen von Schritt b) des Verfahrens gemäß der Erfindung durchgeführt wird, mit:

- einer Aufeinanderfolge von linearen Rampen von wachsenden und schrumpfenden Potenzialen mit einer Potenzialsweep-Geschwindigkeit im Bereich von 1 - 1000 mV s$^{-1}$,
- eine Aufeinanderfolge von Potenzialstufen mit einer Dauer, die zwischen 1 s und 36 000 s liegt; oder
- eine Mischung aus Rampen und aus Stufen für die wachsenden bzw. schrumpfenden Potenzialphasen.

6. Verfahren zur Herstellung nach einem der Ansprüche 3 bis 5, **dadurch gekennzeichnet, dass** die Sequenz von Polarisierungen ein rechtwinkliges Profil aufweist, dessen:

   - Reduktionspotenzial zwischen 0,05 V/RHE und 0,5 V/RHE liegt;
   - Oxidationspotenzial zwischen 0,60 V/RHE und 1,4 V/RHE liegt.

7. Verfahren zur Herstellung nach einem der Ansprüche 3 bis 6, **dadurch gekennzeichnet, dass** die Vorrichtung, die konfiguriert ist, um die Nanopartikel einer Sequenz von Polarisierungen zu unterziehen, aus einer Elektrode oder einer Membran-Elektroden-Montage einer Brennstoffzelle besteht.

8. Verfahren zur Herstellung nach einem der Ansprüche 3 bis 6, **dadurch gekennzeichnet, dass** die Vorrichtung, die konfiguriert ist, um die Nanopartikel einer Sequenz von Polarisierungen zu unterziehen, aus einer rotierenden leitenden Trommel besteht.

9. Verfahren zur Herstellung nach einem der Ansprüche 3 bis 8, **dadurch gekennzeichnet, dass** die multimetallischen Nanopartikeln auf einem Kohlenstoffträger vom Typ $Pt_xM/C$ auf die folgende Weise erhalten werden:

   a') Herstellen von kolloidalen Nanopartikeln aus einem Metall M auf Trägerkohlenstoff d. h. vom Typ M/C, wobei das Metall M weniger edel als das Platin ist, ausgehend von Metallsalzen $M^{z+}$.
   b') Ausführen einer Ablagerung von Platin auf den Nanopartikeln, die am Ausgang von Schritt a') erhalten wurden.

10. Verfahren zur Herstellung nach einem der Ansprüche 3 bis 9, **dadurch gekennzeichnet, dass** es einen Schritt c) am Ausgang von Schritt b) aufweist, im Laufe dessen die Nanopartikel in einer sauren Lösung gewaschen werden.

11. Verfahren zur Herstellung nach einem der Ansprüche 3 bis 9 oder nach Anspruch 10, wenn das Verfahren zur Herstellung den Schritt c) aufweist, **dadurch gekennzeichnet, dass** es außerdem einen Schritt c') der Nachbearbeitung aufweist, bestehend aus einem Durchgang in einen Ofen bei einer kontrollierten Temperatur, die zwischen 100 und 600 °C liegt, während einer Dauer, die zwischen 10 Minuten und 10 Stunden liegt, wobei der Schritt c') wie folgt ausgeführt wird:

   - entweder direkt am Ausgang von Schritt b), wenn das Verfahren keinen Schritt c) aufweist;
   - oder am Ausgang von Schritt c), wenn das Verfahren einen Schritt c) aufweist.

12. Verfahren zur Herstellung nach einem der Ansprüche 3 bis 9 oder nach Anspruch 10, wenn das Verfahren zur Herstellung den Schritt c) aufweist, **dadurch gekennzeichnet, dass** es außerdem einen Schritt c') der Nachbearbeitung aufweist, wobei es sich um eine elektrochemische Nachbearbeitung handelt, die darin besteht, eine Sequenz von Polarisierungen in einer Elektrolytlösung durchzuführen, die verschieden von der Elektrolytlösung von Schritt b) ist, wobei der Schritt c') wie folgt ausgeführt wird:

   - entweder direkt am Ausgang von Schritt b), wenn das Verfahren keinen Schritt c) aufweist;
   - oder am Ausgang von Schritt c), wenn das Verfahren diesen Schritt c) aufweist.

13. Verfahren zur Herstellung nach einem der Ansprüche 11 bis 12, **dadurch gekennzeichnet, dass** der Schritt c') unter neutraler, oxidierender oder reduzierenden kontrollierter Atmosphäre ausgeführt wird.

14. Verwendung von hohlen Nanopartikeln aus Platin auf einem Kohlenstoffträger nach einem der Ansprüche 1 bis 2 in einer Vorrichtung, die bei einer Temperatur von weniger als 250 °C arbeitet, ausgewählt aus der Gruppe, bestehend aus den folgenden Batterien:

   - Alkali, vom Typ AFC;
   - mit Phosphorsäure, vom Typ PAFC,
   - mit Protonenaustauschmembran;
   - mit direkter Alkoholoxidation;

- mit direkter Oxidation von anderen leichten organischen Verbindungen;
- mit direkter Borhydridoxidation;

Elektrolysegeräten zur Erzeugung von Wasserstoff; Elektrolysegeräten zur Erzeugung von gechlorten Produkten; Elektrolysegeräten zur Erzeugung von Wasserstoffperoxyd; Reduktions- oder Oxidationsgassensoren; Metall-Luft-Batterien.

**Claims**

1. A hollow platinum nanoparticle on a carbon support:

   - said nanoparticle has a diameter comprised between 3 nm and 20 nm ;
   - said nanoparticle comprises a first central cavity ;
   - said nanoparticle does not include any alloy elements of the non-noble metal type ;
   - said nanoparticle is quasi-spherical;

   **characterized in that**:

   - said nanoparticle comprises a dense and single-crystal shell which is without any porosity at an atomic scale, the thickness of which is comprised between 0.2 nm and 5 nm;
   - said nanoparticle comprises a number of atoms with low coordination that is less than 10% of the total number of atoms of surface.

2. The hollow platinum nanoparticle according to claim 1, wherein the central cavity has a diameter comprised between 2 nm and 10 nm.

3. A method for manufacturing hollow platinum nanoparticles on a carbon support according to any of claims 1 to 2 which comprises the following steps:

   a) Multi-metal nanoparticles are provided on a carbon support of the $Pt_xM/C$ type, with x comprised between 0.2 and 10 and M being a metal less noble than platinum, in a device configured so as to subject the nanoparticles to a sequence of polarizations;
   b) A sequence of polarizations is carried out on said nanoparticles between the two following potentials:

   - a reducing potential, comprised between 0 and 0.5 V/RHE (V/RHE meaning that the potential is measured relatively to a reversible hydrogen electrode) and
   - an oxidizing potential comprised between 0.9 and 3 V/RHE), until single-crystal hollow platinum nanoparticles are obtained, with a diameter comprised between 3 nm and 20 nm, the shell of which is dense with a thickness comprised between 0.2 nm and 5 nm,

   the step b) being carried out in an electrolytic solution.

4. The manufacturing method according to claim 3, wherein step b) is carried out until single-crystal hollow platinum nanoparticles are obtained with a diameter comprised between 3 nm and 10 nm and the shell of which is dense with a thickness comprised between 0.277 nm and 0.831 nm.

5. The manufacturing method according to any of claims 3 to 4, wherein the sequence of polarizations of step b) of the method according to the invention is carried out with:

   - a succession of linear rising and falling ramps of potentials at a scanning rate in the range 1-1,000 mV s$^{-1}$ ;
   - a succession of plateaus of potentials with a duration comprised between 1s and 36,000 seconds; or
   - a mixture of ramps and plateaus for rising, respectively falling, phases of potential.

6. The manufacturing method according to any of claims 3 to 5, wherein the sequence of polarizations has a rectangular profile, for which:

   - the reducing potential is comprised between 0.05 V/RHE and 0,5 V/RHE ;

- the oxidizing potential is comprised between 0.60 V/RHE and 1.4 V/RHE.

7. The manufacturing method according to any of claims 3 to 6, wherein the device configured for submitting the nanoparticles to a sequence of polarizations consists in an electrode or a membrane-electrodes assembly of a fuel cell.

8. The manufacturing method according to any of claims 3 to 6, wherein the device configured for submitting the nanoparticles to a sequence of polarizations consists in a rotary conducting drum.

9. The manufacturing method according to any of claims 3 to 8, wherein the multi-metal nanoparticles on a carbon support of the PtxM/C type are obtained in the following way:

a') Colloidal nanoparticles of a metal M on a carbon support, i.e. of the M/C type, the metal M being less noble than platinum, are made from $M^{z+}$ metal salts,
b') A platinum deposit is made on the nanoparticles obtained at the end of step a').

10. The manufacturing method according to any of claims 3 to 9, wherein it comprises a step c) at the end of step b) during which said nanoparticles are cleaned in an acidic solution.

11. The manufacturing method according to any of claims 3 to 9 or to claim 10 when the manufacturing method comprises the step c), wherein it further comprises a step c') of post-treatment which is carried out in an oven at a controlled temperature comprised between 100°C and 600°C, during a duration comprised between 10 minutes and 10 hours, said step c') being carried out:

- either directly at the end of step b) if the method does not comprise step c);
- or at the end of step c) if the method comprises step c).

12. The manufacturing method according to any of claims 3 to 9 or to claim 10 when the manufacturing method comprises the step c), wherein it further comprises a step c') of post-treatment which is an electrochemical post-treatment and consists in carrying out a sequence of polarizations in an electrolytic solution that is different from the electrolytic solution of step b), said step c') being carried out:

- either directly at the end of step b) if the method does not comprise step c);
- or at the end of step c) if the method comprises step c).

13. The manufacturing method according to any of claims 11 to 12, wherein step c') is carried out under a controlled atmosphere which is neutral, oxidative or reductive.

14. The use of hollow platinum nanoparticles on a carbon support according to any of claims 1 to 2 in a device operating at a temperature of less than 250°C, selected from the group formed by:

- alkaline cells of the AFC type;
- phosphoric acid cells of the PAFC type;
- cells with a proton exchange membrane;
- cells with direct oxidation of alcohol;
- cells with direct oxidation of other lightweight organic compounds;
- cells with direct oxidation of borohydride;

electrolyzers for generating hydrogen; electrolyzers for generating chlorinated products; electrolyzers for generating hydrogen peroxide; reducing or oxidizing gas sensors; metal-air batteries.

**FIG. 1**

**FIG. 2**

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012009467 A1
- JP 2007207679 A
- KR 100728199 B1

**Littérature non-brevet citée dans la description**

- Further insights into the durability of PtCo/C electrocatalysts: Formation of hollow Pt nanoparticles induced by the Kirkendall effect. **DUBAU L et al.** ELECTROCHIMICA ACTA. ELSEVIER SCIENCE PUBLISHERS, 15 Mars 2011, vol. 56, 10658-10667
- **ZHANG et al.** *Chem. Mater.,* 2003, vol. 15, 451-459
- **BÔNNEMAN et al.** *Journal of Organometallic Chemistry,* 1996, vol. 520, 143-162
- **ANTOLINI et al.** *Journal of Materials Science,* 2003, vol. 38, 2995-3005
- **ANTOINE et al.** *Electrochemical and Solid-State Letters,* 2001, vol. 4, A55-A58
- **ADZIC et al.** Platinum Monolayer Fuel Cell Electro-catalysts. *Top. Catal,* 2007, vol. 46, 249-262